# EUROPÄISCHE PATENTANMELDUNG

(11) **EP 3 361 056 A1**
(43) Veröffentlichungstag der Anmeldung: **15.08.2018**
(21) Anmeldenummer: 17155609.5
(22) Anmeldetag: 10.02.2017
(51) Int. Cl.: F01D 11/00, F01D 11/02, F01D 25/12

(54) **LEITSCHAUFEL FÜR EINE STRÖMUNGSMASCHINE**

(71) Anmelder: Siemens Aktiengesellschaft, 80333 München (DE)
(72) Erfinder: Beeck, Alexander Ralph, Orlando, 32828 (US); Bolms, Hans-Thomas, 13591 Berlin (DE)

(57) **Zusammenfassung**

Die voliegende Offenbarung betrifft eine Leitschaufel (1) für eine Strömungsmaschine mit einem Schaufelblatt (2) und zumindest einer Plattform (3), mit der das Schaufelblatt (2) verbunden ist, wobei zur Kühlung der Plattform (3) und des Schaufelblattes (2) ein Kühlkanalsystem vorgesehen ist und wobei die Plattform (3) an ihrer blattabgewandten Seite zumindest eine Dichtlippe (8, 9) für eine Abdichtung zu einem rotierenden System der Strömungsmaschine umfasst, wobei sich durch die Dichtlippe (8, 9) mindestens ein Kühlkanal (12) erstreckt, der einen Teil des Kühlkanalsystems bildet.

## Beschreibung

Die vorliegende Erfindung betrifft eine Leitschaufel für eine Strömungsmaschine mit einem Schaufelblatt und zumindest einer Plattform, mit der das Schaufelblatt verbunden ist, wobei zur Kühlung der Plattform und des Schaufelblattes ein Kühlkanalsystem vorgesehen ist und wobei die Plattform an ihrer blattabgewandten Seite zumindest eine Dichtlippe für eine Abdichtung zu einem rotierenden System der Strömungsmaschine umfasst.

In Strömungsmaschinen, wie etwa Gasturbinen, werden Turbinenschaufeln eingesetzt. Man unterscheidet grundsätzlich zwischen rotierenden Laufschaufeln und stationären Leitschaufeln, die ein heißes fluides Arbeitsmedium, insbesondere Gas, in Richtung der Laufschaufeln leiten. Insbesondere durch die hohe Temperatur des fluiden Arbeitsmediums und dem damit verbundenen hohen Wärmeeintrag aus dem fluiden Arbeitsmedium in die Turbinenschaufeln, sind die Turbinenschaufeln während ihres Betriebs hohen thermischen Belastungen ausgesetzt. Hierdurch können sich Beschädigungen an den Turbinenschaufeln ergeben.

Um den hohen thermischen Belastungen von Turbinenschaufeln entgegenzutreten, werden Turbinenschaufeln zum einen häufig aus hochtemperaturfesten Metalllegierungen hergestellt. Zum anderen werden Turbinenschaufeln regelmäßig über ein Kühlkanalsystem aktiv mit einem Kühlfluid gekühlt.

Vor diesem Hintergrund liegt der vorliegenden Erfindung die Aufgabe zugrunde, eine Leitschaufel der eingangs genannten Art mit einem effizienten Kühlkanalsystem bereitzustellen.

Zur Lösung dieser Aufgabe schafft die vorliegende Erfindung eine Leitschaufel der eingangs genannten Art, die dadurch gekennzeichnet ist, dass sich durch die Dichtlippe mindestens ein Kühlkanal erstreckt, der einen Teil des Kühlkanalsystems bildet. Auf diese Weise kann auch die Dichtlippe aktiv gekühlt werden, wodurch sich eine effiziente und gleichmäßige Kühlung der gesamten Plattform ergibt. Somit werden starke Temperaturschwankungen innerhalb des Materials vermieden, die zu thermischen Spannungen führen und die Leitschaufel beschädigen können.

Gemäß einer Ausgestaltung der Erfindung ist die zumindest eine Dichtlippe in einem in axialer Strömungsrichtung vorderen oder hinteren Randbereich der Plattform angeordnet und steht zumindest im Wesentlichen radial von der blattabgewandten Seite der Plattform derart ab, dass sie eine Abschlussfläche der Plattform definiert.

Es kann eine Mehrzahl von Kühlkanälen vorgesehen sein, wobei sich die Kühlkanäle jeweils ausgehend von einem freien Ende der Dichtlippe in zumindest im Wesentlichen radialer Richtung und insbesondere zumindest im Wesentlichen parallel zueinander durch die Dichtlippe erstrecken. Durch mehrere Kühlkanäle, die sich auf die zuvor beschriebene Art und Weise erstrecken, wird eine besonders effiziente und gleichmäßige Kühlung der Dichtlippe erreicht. Zudem ergibt sich durch einen Austritt von Kühlluft aus den Kühlkanälen am freien Ende der Dichtlippe während des bestimmungsgemäßen Einsatzes der Leitschaufel eine verbesserte Abdichtung des Spaltes zwischen der Dichtlippe und dem rotierenden System. Vorteilhaft ist zumindest ein Verbindungskanal beabstandet zu dem freien Ende der Dichtlippe vorgesehen, der die Mehrzahl von Kühlkanälen miteinander verbindet und ebenfalls einen Teil des Kühlkanalsystems bildet. Durch den Verbindungskanal, der sich bevorzugt in Umfangsrichtung erstreckt, kann das Kühlfluid den Kühlkanälen zentral zugeführt werden.

Bevorzugt ist die Plattform aus einem Plattformbasisteil und zumindest einem damit verbundenen, bevorzugt angeschweißten oder angelöteten, Plattformzusatzteil zusammengesetzt, wobei der mindestens eine Kühlkanal und bevorzugt weitere Teile des Kühlkanalsystems zumindest teilweise durch das zumindest eine Plattformzusatzteil definiert ist/sind. Durch die mehrteilige, insbesondere zweiteilige, Ausbildung der Plattform lassen sich kleine Kühlkanäle ausbilden und somit insbesondere schmale Dichtlippen effektiv kühlen. Zudem werden der Guss und die mechanische Bearbeitung der Plattform durch die mehrteilige Ausbildung deutlich vereinfacht.

Vorteilhaft ist in dem Plattformbasisteil mindestens eine Nut, insbesondere eine gießtechnisch hergestellte Nut, vorgesehen, die durch ein Plattformzusatzteil in Form eines Blechs, insbesondere eines Metallblechs, abgedeckt ist, um zumindest den mindestens einen Kühlkanal zu definieren. Es ist somit möglich, in nur wenigen Arbeitsschritten eine Mehrzahl von Kühlkanälen auszubilden.

Die Plattform kann zwei unmittelbar benachbarte Dichtlippen an ihrer blattabgewandten Seite umfassen, die sich insbesondere zumindest im Wesentlichen parallel und beabstandet zueinander erstrecken.

Zweckmäßigerweise ist das Plattformzusatzteil in Form eines U-förmigen Profilblechs vorgesehen, das derart zwischen den beiden Dichtlippen angeordnet ist, dass dessen gegenüberliegende Schenkel an den Dichtlippen flächig anliegen und die mindestens eine Nut abdecken.

Alternativ kann das Plattformzusatzteil in Form eines U-förmigen Profilblechs vorgesehen sein, dessen erster Schenkel flächig an einer ersten der beiden Dichtlippen anliegt, um die darin vorgesehene mindestens eine Nut abzudecken, und dessen zweiter Schenkel mit einem Schenkel eines weiteren Plattformzusatzteils in Form eines Abschlussblechs verbunden, insbesondere daran geschweißt oder gelötet, ist, um die zweite der beiden Dichtlippen durch die beiden verbundenen Schenkel zu definieren.

Zusätzlich oder alternativ zu einer Löt- oder Schweißverbindung ist es auch möglich, dass das U-förmige Profilblech zwischen den beiden Dichtlippen oder zwischen der Dichtlippe und dem Schenkel des Abschlussblechs festgeklemmt und somit kraftschlüssig gehalten ist. Bei Erwärmung der Plattform während des Betriebs dehnt sich der Werkstoff des Profilblechs schneller als der der Plattform aus, was die kraftschlüssige Verbindung noch verstärkt.

Gemäß einer weiteren Alternative kann das Plattformzusatzteil in Form eines einteiligen Profilblechs mit einem U-förmigen Abschnitt, dessen erster Schenkel flächig an einer ersten der beiden Dichtlippen anliegt, um die darin vorgesehene mindestens eine Nut abzudecken, und dessen zweiter Schenkel die zweite der beiden Dichtlippen definiert, und einem sich daran anschließenden Abschlussblechabschnitt vorgesehen sein. Durch die einteilige Ausbildung des Profilblechs entfällt der Arbeitsschritt eines Verbindens eines Plattformzusatzteils in Form eines U-förmigen Profilblechs mit einem Plattformzusatzteil in Form eines Abschlussblechs mittels Löten oder Schweißen.

Alternativ zu der mindestens einen Nut in dem Plattformbasisteil, die durch ein Plattformzusatzteil in Form eines Blechs abgedeckt ist, um den mindestens einen Kühlkanal zu definieren, kann das Plattformzusatzteil additiv, bevorzugt mittels selektiven Laserschmelzens, SLM, hergestellt sein und zumindest den mindestens einen Kühlkanal vollständig definieren. Somit wird das Plattformzusatzteil inklusive des darin ausgebildeten mindestens einen Kühlkanals einteilig in einem Arbeitsgang hergestellt.

Durch die additive Fertigung kann das Plattformzusatzteil Kühlkanäle der unterschiedlichsten Formen aufweisen. Beispielsweise kann das Plattformzusatzteil sehr feine und/oder mikrostrukturartige Kühlkanäle aufweisen, die eine äußerst effiziente Nutzung des Kühlfluids, insbesondere Kühlluft, ermöglichen. Ebenso kann durch die additive Fertigung mindestens ein Turbulenzelement in den mindestens einen Kühlkanal eingebracht sein. Ein Turbulenzelement ermöglicht eine genaue Anpassung des Wärmeübergangs an die jeweilige Belastung der Plattform.

Zweckmäßigerweise definiert das additiv hergestellte Plattformzusatzteil eine vollständige Dichtlippe mit dem mindestens einen Kühlkanal. Das additiv hergestellte Plattformzusatzteil kann auch zwei über eine Verstrebung verbundene Dichtlippen und ein mit den Dichtlippen verbundenes Abschlussblech definieren.

Bevorzugt definiert das Plattformzusatzteil zusätzlich zu der Mehrzahl von Kühlkanälen zumindest teilweise auch den zuvor beschriebenen, die Mehrzahl von Kühlkanälen verbindenden Verbindungskanal oder weitere Teile des Kühlkanalsystems.

Das Plattformbasisteil und/oder das zumindest eine Plattformzusatzteil können aus einer Superlegierung, bevorzugt einer Nickelbasis-Superlegierung, hergestellt sein. Vorteilhaft sind das Plattformbasisteil und das zumindest eine Plattformzusatzteil aus demselben Material, insbesondere aus einer Superlegierung, bevorzugt einer Nickelbasis-Superlegierung, hergestellt. Der Vorteil einer Nickelbasis-Superlegierung ist, dass diese eine ausreichende Temperaturfestigkeit sowie Oxidations- und Temperaturbeständigkeit aufweist.

Alternativ zu der zuvor beschriebenen mehrteiligen Ausbildung der Plattform kann der zumindest eine Kühlkanal im Falle einer einteiligen Ausbildung der Plattform grundsätzlich auch als Bohrloch, insbesondere als ein mittels eines Erodiervorgangs eingebrachtes Bohrloch, ausgebildet sein.

Weitere Merkmale und Vorteile der vorliegenden Erfindung werden anhand der nachfolgenden Beschreibung von vier Ausführungsformen einer Leitschaufel für eine Strömungsmaschine gemäß der vorliegenden Erfindung unter Bezugnahme auf die beiliegende Zeichnung deutlich. Darin ist
- Figur 1: eine schematische Seitenansicht einer Leitschaufel gemäß einer ersten Ausführungsform der vorliegenden Erfindung;
- Figur 2: eine schematische Ansicht eines Teils der Plattform der in Figur 1 dargestellten Leitschaufel von schräg unten;
- Figur 3: eine schematische Ansicht eines Teils der Plattform der in Figur 1 dargestellten Leitschaufel mit sichtbaren Kühl- und Verbindungskanälen von schräg unten;
- Figur 4: eine schematische, vergrößerte Ansicht des in Figur 3 mit B markierten Bereichs der Plattform;
- Figur 5: eine schematische Seitenansicht eines Teils der Plattform der in Figur 1 dargestellten Leitschaufel, teilweise im Schnitt;
- Figur 6: eine schematische Seitenansicht eines Teils der Plattform einer Leitschaufel gemäß einer zweiten Ausführungsform der vorliegenden Erfindung, teilweise im Schnitt;
- Figur 7: eine schematische Seitenansicht eines Teils der Plattform einer Leitschaufel gemäß einer dritten Ausführungsform der vorliegenden Erfindung, teilweise im Schnitt; und
- Figur 8: eine schematische Seitenansicht eines Teils der Plattform einer Leitschaufel gemäß einer vierten Ausführungsform der vorliegenden Erfindung, teilweise im Schnitt.

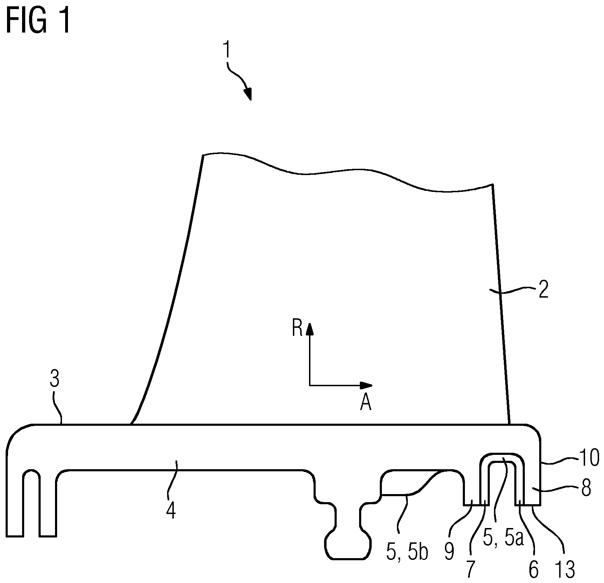

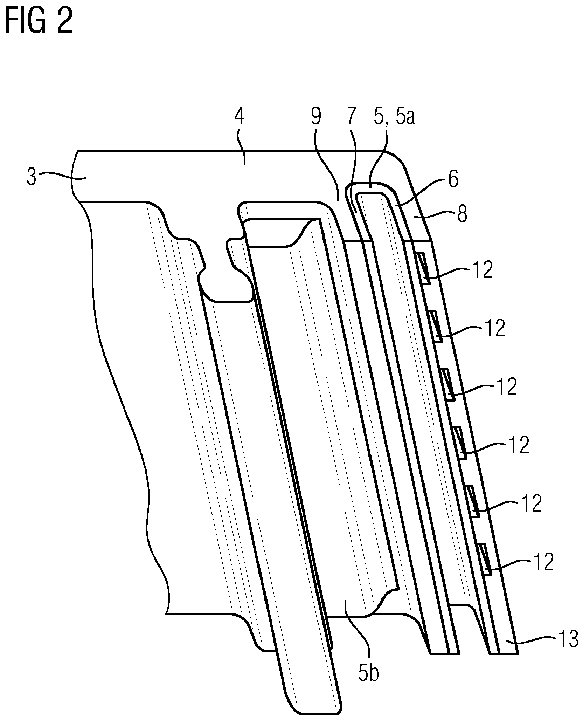

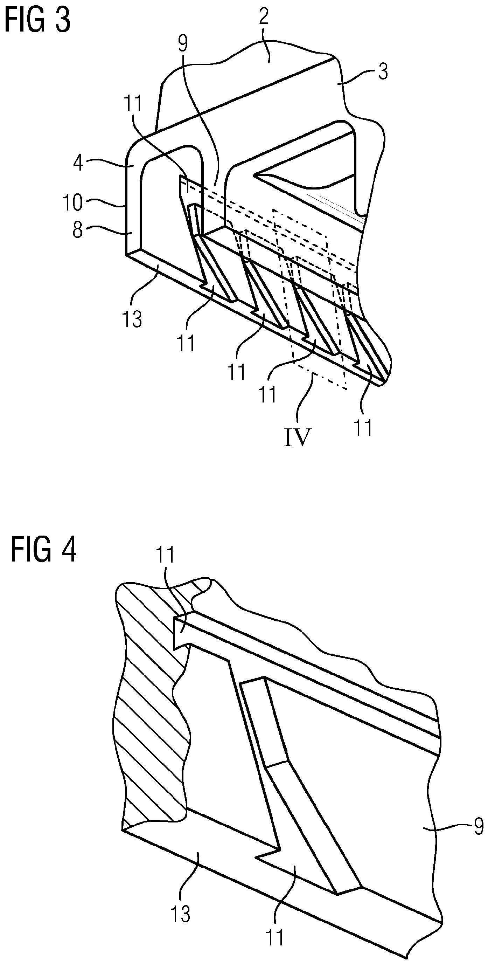

Die Figuren 1 bis 5 zeigen schematische Ansichten einer Leitschaufel 1 für eine Strömungsmaschine gemäß einer ersten Ausführungsform der vorliegenden Erfindung. Hierbei umfasst die Leitschaufel 1 ein Schaufelblatt 2 und eine Plattform 3, mit der das Schaufelblatt 2 verbunden ist. Die Plattform 3 ist aus einem Plattformbasisteil 4 und Plattformzusatzteilen 5 in Form eines U-förmigen Metallprofilblechs 5a mit zwei gegenüberliegenden Schenkeln 6, 7 und in Form eines Abschlussblechs 5b zusammengesetzt, die mittels Schweißen mit dem Plattformbasisteil 4 verbunden sind. Das Plattformbasisteil 4 umfasst an seinem in axialer Strömungsrichtung A hinteren Randbereich zwei unmittelbar benachbarte sowie sich parallel und beabstandet zueinander erstreckende Dichtlippen 8, 9 für eine Abdichtung zu einem rotierenden System der Strömungsmaschine, die radial von der blattabgewandten Seite der Plattform 3 abstehen. Die in axialer Strömungsrichtung A hinterste Dichtlippe 9 definiert eine Abschlussfläche 10 der Plattform 3.

In dem Plattformbasisteil 4, insbesondere in der in axialer Strömungsrichtung A hintersten Dichtlippe 9, sind gießtechnisch hergestellte Nuten 11 vorgesehen. Das U-förmige Metallprofilblech 5a ist derart zwischen den beiden Dichtlippen 8, 9 angeordnet, dass dessen gegenüberliegende Schenkel 6, 7 an den Dichtlippen 8, 9 flächig anliegen, wodurch die Nuten 11 durch das Metallprofilblech 5a abgedeckt werden. Entsprechend werden Kühlkanäle 12 sowohl durch das Plattformbasisteil 4 als auch durch das Metallprofilblech 5a definiert, die einen Teil eines Kühlkanalsystems zur Kühlung der Leitschaufel 1 bilden. Durch die zweiteilige Ausbildung der Plattform 3 lassen sich insbesondere dünne Dichtlippen 8, 9 effizient aktiv kühlen.

In der hier beschriebenen Ausführungsform sind in der Dichtlippe 9 sechs Kühlkanäle 12 ausgebildet, die sich jeweils ausgehend von einem freien Ende 13 der in axialer Strömungsrichtung A hintersten Dichtlippe 9 leicht schräg bezogen auf die radiale Richtung R, also in im Wesentlichen radialer Richtung R, und parallel zueinander durch die Dichtlippe 9 erstrecken.

Zudem umfasst das Kühlkanalsystem einen sich in Umfangsrichtung der Plattform 3 erstreckenden und beabstandet zu dem freien Ende 13 der Dichtlippe 9 vorgesehenen Verbindungskanal 14, in den die Kühlkanäle 12 münden, so dass diese miteinander verbunden sind. Der sich etwa in Umfangsrichtung der Plattform 3 erstreckende Verbindungskanal 14 ist über eine Mehrzahl von sich in axialer Strömungsrichtung A erstreckenden Verbindungskanälen 15 mit einem Sammelkanal 16 verbunden. Der Sammelkanal 16 ist zumindest teilweise durch ein weiteres Plattformzusatzteil 5 in Form eines Abschlussblechs 5b definiert, das mit dem Plattformbasisteil 4 mittels Schweißen verbunden ist. Die Verbindungskanäle 15 und der Sammelkanal 16 bilden ebenfalls einen Teil des Kühlkanalsystems.

Indem das Kühlkanalsystem nicht nur Kanäle innerhalb eines Hauptabschnitts der Plattform 3 sondern auch in der Dichtlippe 8 aufweist, wird eine möglichst gleichmäßige Kühlung der Plattform 3 erreicht und werden starke Temperaturschwankungen innerhalb des Materials der Plattform 3 vermieden.

Bei der zuvor beschriebenen Ausführungsform sind sowohl das Plattformbasisteil 4 als auch die Plattformzusatzteile 5 bzw. 5a und 5b aus derselben Nickelbasis-Superlegierung hergestellt.

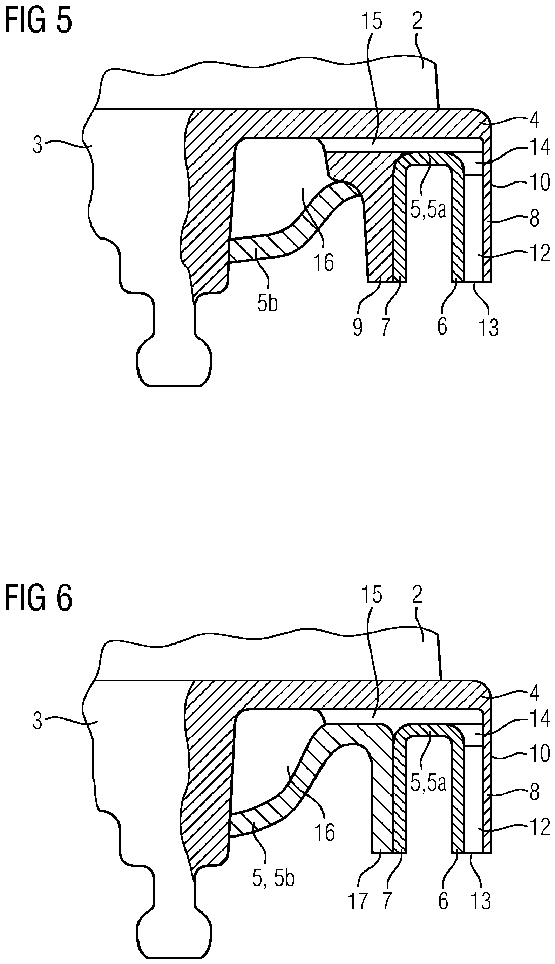

Die in der Figur 6 gezeigte zweite Ausführungsform einer erfindungsgemäßen Leitschaufel 1 entspricht im Wesentlichen der ersten Ausführungsform. Der einzige Unterschied besteht darin, dass bei der zweiten Ausführungsform das Plattformbasisteil 4 an seinem in axialer Strömungsrichtung A hinteren Randbereich nur die erste Dichtlippe 8 der beiden Dichtlippen 8, 9 umfasst. Wie bereits in der ersten Ausführungsform, liegt auch in der zweiten Ausführungsform der erste Schenkel 6 des U-förmigen Metallprofilblechs 5a flächig an der ersten Dichtlippe 8 an und ist mit dieser mittels Schweißen verbunden. Jedoch weist bei der zweiten Ausführungsform auch das Abschlussblech 5b einen Schenkel 17 auf, der mit dem zweiten Schenkel 7 des U-förmigen Metallprofilblechs 5a mittels Schweißen verbunden ist, um die zweite Dichtlippe 9 der beiden Dichtlippen 8, 9 zu definieren. In das Plattformbasisteil 4, insbesondere die erste Dichtlippe 8, sind Nuten 11 eingegossen, die durch das U-förmige Metallprofilblech 5a und das Abschlussblech 5b abgedeckt sind, um die sechs Kühlkanäle 12 und die Verbindungskanäle 14, 15 teilweise zu definieren. Zudem definiert das Abschlussblech 5b gemeinsam mit dem Plattformbasisteil 4 den Sammelkanal 16.

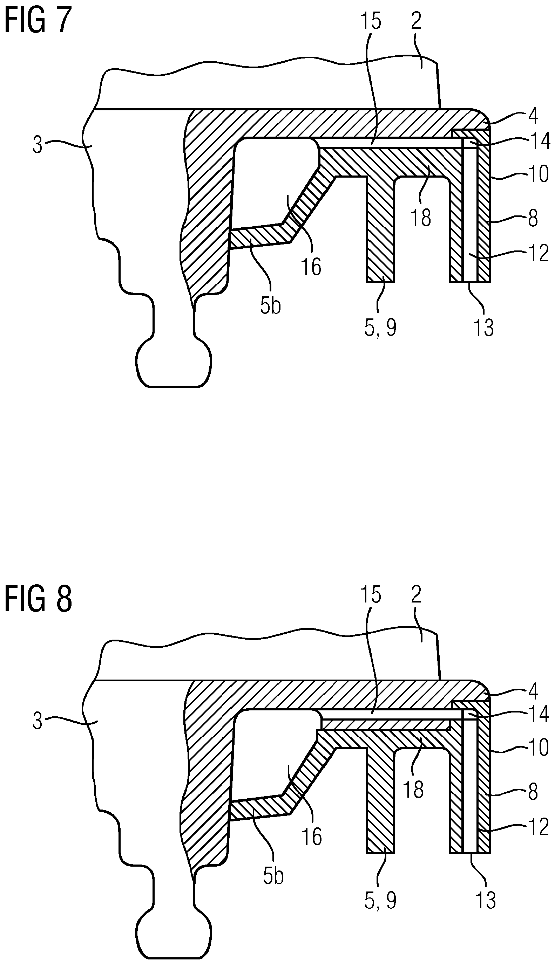

Figur 7 zeigt eine dritte Ausführungsform einer erfindungsgemäßen Leitschaufel 1, bei der die Plattform 3 aus einem Plattformbasisteil 4 und genau einem Plattformzusatzteil 5 zusammengesetzt ist, das additiv mittels selektiven Laserschmelzens hergestellt und mittels Schweißen mit dem Plattformbasisteil 4 verbunden ist. Das Plattformbasisteil 4 umfasst bei der dritten Ausführungsform gar keine Dichtlippe 8, 9. Anstatt dessen definiert das Plattformzusatzteil 5 zwei über eine Verstrebung 19 verbundene Dichtlippen 8, 9 und ein mit den Dichtlippen 8, 9 verbundenes Abschlussblech 5b der Plattform 3.

Zudem definiert das Plattformzusatzteil 5 die bereits im Zusammenhang mit den beiden vorherigen Ausführungsformen erwähnten Kühlkanäle 12 innerhalb der Dichtlippe 8 sowie den sich in Umfangsrichtung der Plattform 3 erstreckenden Verbindungskanal 14 vollständig. Die mittels eines additiven Fertigungsverfahrens ausgebildeten Kühlkanäle 12 sind sehr klein, was insbesondere von Vorteil ist, wenn sehr schmale Dichtlippen aktiv gekühlt werden sollen. In die Kühlkanäle 12 sind Turbulenzelemente eingebracht, die in Figur 7 der Übersichtlichkeit halber nicht gezeigt sind. Solche Turbulenzelemente ermöglichen eine genaue Anpassung des Wärmeübergangs an die jeweilige Belastung der Plattform 3.

Die ebenfalls bereits im Zusammenhang mit den beiden vorherigen Ausführungsformen erwähnten, sich in axialer Strömungsrichtung A erstreckenden Verbindungskanäle 15 sind bei der dritten Ausführungsform in das Plattformbasisteil 4 eingegossen und ebenso wie der Sammelkanal 16 teilweise durch das Plattformzusatzteil 5 definiert.

Wie in der Figur 8 zu sehen, ist das Plattformzusatzteil 5 derart an das Plattformbasisteil 4 geschweißt, dass die Kanäle 12, 14 des Plattformzusatzteils 5 mit den weiteren Kanälen 15, 16 in Fluidverbindung stehen.

Die in der Figur 8 gezeigte vierte Ausführungsform einer erfindungsgemäßen Leitschaufel 1 entspricht im Wesentlichen der dritten Ausführungsform. Der einzige Unterschied besteht darin, dass die sich in axialer Strömungsrichtung A erstreckenden Verbindungskanäle 15 bei der vierten Ausführungsform in das Plattformbasisteil 4 gebohrt und daher vollständig durch das Plattformbasisteil 4 definiert sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitschaufel (1) für eine Strömungsmaschine mit einem Schaufelblatt (2) und zumindest einer Plattform (3), mit der das Schaufelblatt (2) verbunden ist, wobei zur Kühlung der Plattform (3) und des Schaufelblattes (2) ein Kühlkanalsystem vorgesehen ist und wobei die Plattform (3) an ihrer blattabgewandten Seite zumindest eine Dichtlippe (8, 9) für eine Abdichtung zu einem rotierenden System der Strömungsmaschine umfasst,
**dadurch gekennzeichnet, dass**
sich durch die Dichtlippe (8, 9) mindestens ein Kühlkanal (12) erstreckt, der einen Teil des Kühlkanalsystems bildet.

2. Leitschaufel (1) nach Anspruch 1,
**dadurch gekennzeichnet, dass**
die zumindest eine Dichtlippe (8, 9) in einem in axialer Strömungsrichtung A vorderen oder hinteren Randbereich der Plattform (3) angeordnet ist und zumindest im Wesentlichen radial von der blattabgewandten Seite der Plattform (3) derart absteht, dass sie eine Abschlussfläche (10) der Plattform (3) definiert.

3. Leitschaufel (1) nach Anspruch 1 oder 2,
**dadurch gekennzeichnet, dass**
eine Mehrzahl von Kühlkanälen (12) vorgesehen ist, wobei sich die Kühlkanäle (12) jeweils ausgehend von einem freien Ende (13) der Dichtlippe (8, 9) in zumindest im Wesentlichen radialer Richtung R und insbesondere zumindest im Wesentlichen parallel zueinander durch die Dichtlippe (8, 9) erstrecken.

4. Leitschaufel (1) nach Anspruch 3,
**dadurch gekennzeichnet, dass**
beabstandet zu dem freien Ende (13) der Dichtlippe (8, 9) zumindest ein Verbindungskanal (14) vorgesehen ist, der die Mehrzahl von Kühlkanälen (12) miteinander verbindet und einen Teil des Kühlkanalsystems bildet.

5. Leitschaufel (1) nach einem der vorherigen Ansprüche,
**dadurch gekennzeichnet, dass**
die Plattform (3) aus einem Plattformbasisteil (4) und zumindest einem damit verbundenen, bevorzugt angeschweißten oder angelöteten, Plattformzusatzteil (5) zusammengesetzt ist, wobei der mindestens eine Kühlkanal (12) und bevorzugt weitere Teile (14, 15, 16) des Kühlkanalsystems zumindest teilweise durch das zumindest eine Plattformzusatzteil (5) definiert ist/sind.

6. Leitschaufel (1) nach Anspruch 5,
**dadurch gekennzeichnet, dass**
in dem Plattformbasisteil (4) mindestens eine Nut (11), insbesondere eine gießtechnisch hergestellte Nut (11), vorgesehen ist, die durch ein Plattformzusatzteil (5) in Form eines Blechs, insbesondere eines Metallblechs, abgedeckt ist, um zumindest den mindestens einen Kühlkanal (12) zu definieren.

7. Leitschaufel (1) nach einem der vorherigen Ansprüche,
**dadurch gekennzeichnet, dass**
die Plattform (3) zwei unmittelbar benachbarte Dichtlippen (8, 9) an ihrer blattabgewandten Seite umfasst, die sich insbesondere zumindest im Wesentlichen parallel und beabstandet zueinander erstrecken.

8. Leitschaufel (1) nach den Ansprüchen 6 und 7,
**dadurch gekennzeichnet, dass**
das Plattformzusatzteil (5) in Form eines U-förmigen Profilblechs (5a) vorgesehen ist, das derart zwischen den beiden Dichtlippen (8, 9) angeordnet ist, dass dessen gegenüberliegende Schenkel (6, 7) an den Dichtlippen (8, 9) flächig anliegen und die mindestens eine Nut (11) abdecken.

9. Leitschaufel (1) nach den Ansprüchen 6 und 7,
**dadurch gekennzeichnet, dass**
das Plattformzusatzteil (5) in Form eines U-förmigen Profilblechs (5a) vorgesehen ist, dessen erster Schenkel (6) flächig an einer ersten (8) der beiden Dichtlippen (8, 9) anliegt, um die darin vorgesehene mindestens eine Nut (11) abzudecken, und dessen zweiter Schenkel (7) mit einem Schenkel (17) eines weiteren Plattformzusatzteils (5) in Form eines Abschlussblechs (5b) verbunden, insbesondere daran geschweißt oder gelötet, ist, um die zweite (9) der beiden Dichtlippen (8, 9) durch die beiden verbundenen Schenkel (7, 17) zu definieren.

10. Leitschaufel (1) nach den Ansprüchen 6 und 7,
**dadurch gekennzeichnet, dass**
das Plattformzusatzteil (5) in Form eines einteiligen Profilblechs mit einem U-förmigen Abschnitt, dessen erster Schenkel flächig an einer ersten (8) der beiden Dichtlippen (8, 9) anliegt, um die darin vorgesehene mindestens eine Nut (11) abzudecken, und dessen zweiter Schenkel die zweite (9) der beiden Dichtlippen (8, 9) definiert, und einem sich daran anschließenden Abschlussblechabschnitt vorgesehen ist.

11. Leitschaufel (1) nach Anspruch 5,
**dadurch gekennzeichnet, dass**
das Plattformzusatzteil (5) additiv, bevorzugt mittels selektiven Laserschmelzens, SLM, hergestellt ist und zumindest den mindestens einen Kühlkanal (12) vollständig definiert.

12. Leitschaufel (1) nach Anspruch 11,
**dadurch gekennzeichnet, dass**
das Plattformzusatzteil (5) zwei über eine Verstrebung (18) verbundene Dichtlippen (8, 9) und ein mit den Dichtlippen (8, 9) verbundenes Abschlussblech (5b) definiert.

13. Leitschaufel (1) nach Anspruch 11 oder 12,
**dadurch gekennzeichnet, dass**
in den mindestens einen Kühlkanal (12) mindestens ein Turbulenzelement eingebracht ist.

14. Leitschaufel (1) nach einem der Ansprüche 5 bis 13,
**dadurch gekennzeichnet, dass**
das Plattformbasisteil (4) und/oder das zumindest eine Plattformzusatzteil (5) aus einer Superlegierung, bevorzugt einer Nickelbasis-Superlegierung, hergestellt ist/sind.

15. Leitschaufel (1) nach einem der Ansprüche 5 bis 13,
**dadurch gekennzeichnet, dass**
das Plattformbasisteil (4) und das zumindest eine Plattformzusatzteil (5) aus demselben Material, insbesondere aus einer Superlegierung, bevorzugt einer Nickelbasis-Superlegierung, hergestellt sind.
